# EUROPÄISCHE PATENTSCHRIFT

(11) **EP 0 371 230 B1**
(45) Veröffentlichungstag und Bekanntmachung des Hinweises auf die Patenterteilung: **07.01.1993**
(21) Anmeldenummer: 89117917.8
(22) Anmeldetag: 28.09.1989
(51) Int. Cl.: B29C 47/50, B29C 47/76

(54) **Verfahren zum Entfernen von Verunreinigungen aus polymeren Kunststoffen und Vorrichtung zur Durchführung des Verfahrens**
Method and apparatus for the elimination of impurities from polymer plastics, and apparatus to carry out the method
Procédé d'élimination des impuretés de matières plastiques polymères et dispositif pour la mise en oeuvre du procédé

(30) Priorität: 30.11.1988 DE 3840293
(43) Veröffentlichungstag der Anmeldung: 06.06.1990
(73) Patentinhaber: Werner & Pfleiderer GmbH, 70469 Stuttgart (DE)
(72) Erfinder: Herrmann, Heinz, Dipl.-Ing., D-7000 Stuttgart 50 (DE); Rath, Dieter, Dr.-Ing., D-7300 Esslingen (DE)
(74) Vertreter: Rau, Manfred, Dr. Dipl.-Ing.

(56) Entgegenhaltungen:
- EP-A- 0 068 561
- EP-A- 0 233 661
- FR-A- 1 576 156
- FR-A- 2 107 282
- FR-A- 2 360 397
- FR-A- 2 599 294
- US-A- 3 799 234
- US-A- 4 067 554

## Beschreibung

Die Erfindung betrifft ein Verfahren nach dem Oberbegriff des Anspruches 1 und eine Vorrichtung nach dem Oberbegriff des Anspruches 3.

Ein Verfahren und eine Vorrichtung der gattungsgemäßen Art sind aus der EP-A 1-0 233 661 bekannt. Hierbei ist ein 1-Schnecken-Extruder vorgesehen, der eine Aufschmelzzone aufweist, in der mit Verunreinigungen versehener Kunststoff aufgeschmolzen wird. Der Aufschmelzzone ist eine Mischzone nachgeordnet, in die eine Zuführleitung für Extraktions-Gas einmündet. Dieses Gas wird in überkritischem Zustand zugeführt, d. h. Druck und Temperatur befinden sich in der Nähe des kritischen Punktes und zwar entweder leicht darunter oder leicht darüber. Bevorzugt ist, Druck und Temperatur leicht oberhalb des kritischen Punktes anzusiedeln. Die Temperatur ist im Bereich der Temperatur der Kunststoff-Schmelze. Der Mischzone ist eine Entspannungszone oder Austragszone nachgeordnet, d. h. die Schmelze wird aus dem Extruder unter Atmosphärendruck aus diesem ausgetragen, wobei eine schlagartige Entspannung stattfindet. Hierbei soll das Gas mit den Verunreinigungen sich von der Schmelze trennen. Dieses Verfahren und die Vorrichtung sind insgesamt hinsichtlich des Reinigungsergebnisses und hinsichtlich der Möglichkeit der Rückgewinnung des Gases nicht befriedigend.

Aus der DD-A-69 099 ist ein Verfahren und eine Vorrichtung zum Trennen von Lösungsmitteln aus heißen Kunststoff-Schmelzen bekannt. Hierbei sind zwei Gleichdrall-Doppelschnecken-Extruder einander nachgeschaltet. Der erste Extruder weist eine Kühlzone auf, die mittels eines Stauelementes bzw. einer Dichtung von einer stromabwärts nachgeordneten Aufschmelzzone getrennt ist. Unmittelbar vor der Dichtung mündet eine Einsprühöffnung in die Kühlzone ein, durch die heißer, aufgeschmolzener, Lösungsmittel enthaltender Kunststoff eingesprüht wird. Ein Teil des Lösungsmittels kondensiert aus und wird stromaufwärts durch eine Abzugsöffnung entnommen. In der Aufschmelzzone wird der noch Lösungsmittelreste enthaltene Kunststoff wieder aufgeschmolzen, wobei der notwendige Druck durch eine in der Verbindungsleitung zwischen den Extrudern befindliche Drossel hergestellt wird. Der zweite Extruder weist wiederum an seinem stromaufwärts gelegenen Ende eine Kühlzone auf, die durch Stauelemente bzw. Dichtungen von nachfolgenden beheizten Entgasungszonen abgetrennt ist. In diese Kühlzone wird die noch Rest-Lösungsmittel enthaltene Kunststoff-Schmelze in der Nähe der Dichtung eingesprüht, wobei in gleicher Weise Teile des Lösungsmittels kondensiert und durch eine stromaufwärts gelegene Abzugsöffnung abgezogen werden. Der Kunststoff wird über die Dichtung in die Vakuumzonen gefördert, wo der Rest-Entzug des Lösungsmittels erfolgt.

Die sogenannte Hochdruckextraktion, auf die sich die vorliegende Erfindung bezieht, ist allgemein bekannt und beispielsweise in der Veröffentlichung der Krupp Industrietechnik GmbH - Krupp Forschungsinstitut - 114-440 d 1068520 im einzelnen beschrieben.

Der Erfindung liegt die Aufgabe zugrunde, ein Verfahren und eine Vorrichtung der gattungsgemäßen Art so weiterzubilden, daß ein zufriedenstellendes Entfernen der Verunreinigungen aus der verunreinigten Substanz und ein zuverlässiges Wiedergewinnen des Extraktions-Gases erreicht wird.

Diese Aufgabe wird erfindungsgemäß bei einem Verfahren der gattungsgemäßen Art durch die Merkmale im Kennzeichnungsteil des Ansprüches 1 gelöst. Sie wird weiterhin bei einer Vorrichtung der gattungsgemäßen Art durch die Merkmale im Kennzeichnungsteil des Anspruches 3 gelöst. Nach der Erfindung ist wichtig, daß das Einmischen des Gases unter definierten Druckverhältnissen im überkritischem Zustand erfolgt, so daß das Extraktions-Gas auch zuverlässig mit der Schmelze gemischt wird, der Extraktions-Prozeß also zuverlässig erfolgt. Wichtig hierfür ist, daß über die Konstanthaltung des Druckes während des Mischprozesses auch die Einmischzeit und die Verweilzeit des Gases in der Kunststoff-Schmelze beeinflußbar ist. Durch ein der Mischzone nachgeordnetes geeignetes Entspannungsventil oder eine geeignete Drossel kann dies erreicht werden. Dem zweiten Extruder wird dann das die Verunreinigungen enthaltende Extraktions-Gas in Gasform entnommen.

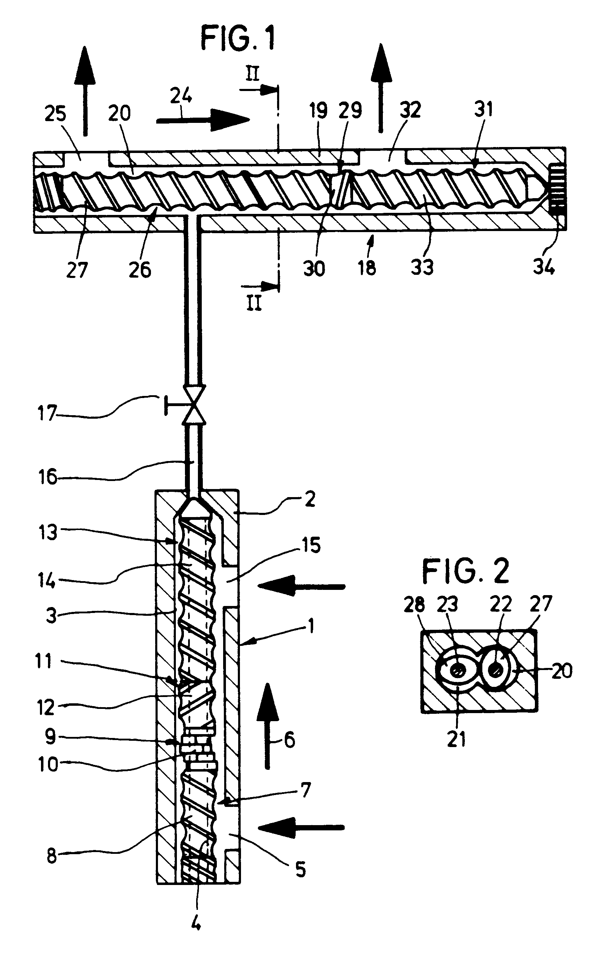

Weitere Merkmale, Vorteile und Einzelheiten der Erfindung ergeben sich aus den Unteransprüchen und der nachfolgenden Beschreibung eines Ausführungsbeispieles der Erfindung anhand einer stark schematisierten Zeichnung. Es zeigt
Fig. 1 eine Draufsicht auf einen horizontalen Querschnitt durch eine Vorrichtung nach der Erfindung und
Fig. 2 einen vertikalen Querschnitt durch einen Teil der Vorrichtung gemäß der Schnittlinie II-II in Figur 1.

Ein erster Extruder 1 weist ein Gehäuse 2 mit einer Bohrung 3 auf. In dieser ist eine Welle 4 angeordnet, die von einem nicht dargestellten Antrieb drehantreibbar ist. Im Gehäuse 1 befindet sich eine Eingabeöffnung 5 für Kunststoff, und zwar speziell für Verunreinigungen enthaltenden polymeren Kunststoff. Dieser Eingabeöffnung 5 ist in Förderrichtung 6, also stromabwärts, eine Einzugszone 7 nachgeordnet, in der auf der Welle 4 ein Schneckenwindungsabschnitt 8 drehfest angebracht ist. An die Einzugszone 7 schließt sich eine auch als Plastifizierzone bezeichnete Aufschmelzzone 9 an. In einer solchen Aufschmelzzone 9 sind üblicherweise sogenannte Knetscheiben 10 angeordnet, wie sie in der Praxis allgemein bekannt und üblich sind.

An die Aufschmelzzone 9 schließt sich eine Schmelze-Dichtung 11 an, die durch ein Rückfördergewinde 12 gebildet ist. Auch derartige Schmelze-Dichtungen sind in der Praxis allgemein bekannt. Weiter stromabwärts, also in Förderrichtung 6, befindet sich eine Mischzone 13, in der die Welle 4 des Extruders 1 drehfest mit einem Schneckenwindungsabschnitt 14 versehen ist und gegebenenfalls weitere bekannte Mischeinrichtungen aufweist. In diese Mischzone 13 mündet eine Zuführung 15 für Extraktions-Gas in überkritischem Zustand. In Förderrichtung 6 am Ende des ersten Extruders 1 mündet aus der Mischzone 13 eine Verbindungsleitung 16 aus, in der ein Gegendruckventil 17 angeordnet ist. Die Verbindungsleitung 16 führt zu einem zweiten Extruder 18, der als Doppelschnecken-Gleichdrall-Extruder ausgebildet ist. In seinem Gehäuse 19 befinden sich zwei zueinander parallele, einander teilweise durchdringende Bohrungen 20, 21, in denen zwei ebenfalls zueinan- der parallele Wellen 22, 23 angeordnet sind, die von einem nicht dargestellten Antrieb gleichsinnig, also in gleichem Drehsinn, angetrieben werden. Der zweite Extruder 18 weist bezogen auf seine Förderrichtung 24 am stromaufwärts gelegenen Ende eine Abzugsöffnung 25 für das Extraktions-Gas auf. Diese Abzugsöffnung 25 ist an einem Ende einer Trennzone 26 ausgebildet, in der auf den Wellen 22, 23 Schneckenwindungsabschnitte 27, 28 drehfest angebracht sind, die dicht kämmen. Diese Trennzone 26 ist stromabwärts mittels einer Schmelze-Dichtung 29 abgeschlossen, die durch Rückfördergewinde 30 gebildet ist.

Der Schmelze-Dichtung 29 ist in Förderrichtung 24 eine Vakuumzone 31 nachgeordnet, die mit einer Vakuumabzugsöffnung 32 versehen ist, durch die noch Rest-Gas entweichen kann. In der Vakuumzone sind die Wellen 22, 23 wiederum mit Schneckenwindungsabschnitten 33 versehen.

Am in Förderrichtung 24 stromabwärts gelegenen Ende des zweiten Extruders 18 ist eine Austragseinrichtung 34, beispielsweise in Form einer Granuliervorrichtung, für den gereinigten polymeren Kunststoff vorgesehen.

Wie die Zeichnung erkennen läßt, mündet die Verbindungsleitung 16 etwa in der Mitte zwischen der Abzugsöffnung 25 und der Schmelze-Dichtung 29 in die Trennzone 26.

Das Einmischen des überkritischen Gases in die Kunst stoffschmelze in der Mischzone 13 des ersten Extruders 1 erfolgt unter definierten Druck- und Zeit-Verhältnissen, also außerordentlich intensiv, weil in der Verbindungsleitung 16 das Gegendruckventil 17 angeordnet ist, das durch ein Druckminderventil, ein Entspannungsventil oder aber auch eine Drossel gebildet sein kann, so daß in der Mischzone 13 der dem überkritischen Druck des Extraktions-Gases entsprechende Druck aufrecht erhalten werden kann. Dies ist besonders wichtig, weil die Viskosität der Kunststoff-Schmelze in der Mischzone 13 durch das Zumischen des Extraktions-Gases drastisch gesenkt wird. Bei Nichtvorhandensein eines geeigneten Gegendruckventils 17 könnte sonst der entsprechende sehr hohe Druck in der Mischzone 13 nicht aufrecht erhalten werden. Wenn als ExtraktionsGas beispielsweise CO₂ eingesetzt wird, dann muß bei einer Temperatur von 75° C ein Druck von ca. 165 bar gewählt werden, um in den überkritischen Bereich zu kommen. Durch diese Maßnahmen läßt sich einerseits der erforderliche Druck aufrechterhalten und andererseits aber ein kontinuierlicher oder zumindestens quasi-kontinuierlicher Betrieb durchführen.

Da die Verbindungsleitung 16 etwa in der Mitte zwischen der Abzugsöffnung 25 und der Schmelze-Dichtung 29 in die Trennzone 26 einmündet, strömt das Gas entgegen der Förderrichtung 24, also stromaufwärts, zur Abzugsöffnung 25. Durch die Gegenstrom-Auftrennung in der Trennzone 26 des zweiten Extruders 18 ist ein geordneter Abzug des Gases möglich, das durch den Extraktionsprozeß in der Mischzone 13 des ersten Extruders 1 weitgehend die ursprünglich im Kunststoff enthaltenen Verunreinigungen aufgenommen hat.

Die weitgehend vom Gas und den Verunreinigungen befreite Kunststoff-Schmelze fließt über die Schmelze-Dichtung 29 in die Vakuumzone 31, wo sie vollständig von Restgas und Rest-Verunreinigungen befreit wird, die durch die Vakuumabzugsöffnung 32 abgezogen werden. Die geordnete Abführung des die Verunreinigungen tragenden Extraktions-Gases einerseits und der gereinigten Kunststoff-Schmelze andererseits ist wesentlich dadurch ermöglicht, daß die Trennung des die Verunreinigungen tragenden Gases von der Kunststoffschmelze noch in dem zweiten Extruder 18, also in einem geschlossenen Raum, erfolgt.

## Patentansprüche

1. Verfahren zum Entfernen von Verunreinigungen, wie monomeren niedermolekularen Substanzen, Lösungsmitteln oder dergleichen, aus polymeren Kunststoffen, wobei ein Verunreinigungen enthaltender Kunststoff unter Druck aufgeschmolzen und anschließend die Schmelze mit einem Extraktions-Gas im überkritischem Zustand gemischt wird, und wobei das Gemisch aus Schmelze und Gas durch Druckentlastung in von den Verunreinigungen weitgehend befreite Schmelze und die Verunreinigungen enthaltendes Gas aufgetrennt wird, dadurch gekennzeichnet, daß das Mischen von Schmelze und Gas bei überkritischem Druck in einem abgeschlossenen Raum erfolgt, daß das Gemisch in einen weiteren Raum überführt und dort aufgetrennt wird und daß das Gas mit den Verunreinigungen einerseits und der weitgehend von den Verunreinigungen befreite Kunststoff andererseits dem Raum an voneinander distanzierten Stellen entnommen werden.

2. Verfahren nach Anspruch 1, dadurch gekennzeichnet, daß die weitgehend von den Verunreinigungen und Gas befreite Schmelze einer Vakuumbehandlung unterzogen wird.

3. Vorrichtung zur Durchführung des Verfahrens nach Anspruch 1 oder 2, mit einem mindestens eine Schnecke enthaltenden Extruder (1), der eine Eingabeöffnung (5) für Verunreinigungen enthaltenden Kunststoff, eine dieser nachgeordnete Aufschmelzzone (9) und eine dieser nachgeordnete Mischzone (13) aufweist, in die eine Zuführung (15) für Extraktions-Gas in überkritischem Zustand einmündet, wobei der Mischzone (13) eine Einrichtung zum Trennen des Gases mit Verunreinigungen von der Schmelze nachgeordnet ist, dadurch gekennzeichnet, daß die Einrichtung durch einen mindestens eine antreibbare Schnecke enthaltenden zweiten Extruder (18) gebildet ist, der mit dem ersten Extruder (1) über eine Verbindungsleitung (16) verbunden ist, die in eine Trennzone (26) des zweiten Extruders (18) einmündet, daß die Mischzone (13) im ersten Extruder (1) gegen die Aufschmelzzone (9) und gegen den zweiten Extruder (18) abgedichtet ist und daß die Trennzone (26) des zweiten Extruders (18) stromaufwärts einer Austragseinrichtung (34) für den Kunststoff mit mindestens einer Abzugsöffnung (25) für das Extraktions-Gas versehen ist.

4. Vorrichtung nach Anspruch 3, dadurch gekennzeichnet, daß der Mischzone (13) ein Gegendruckventil (17) nachgeordnet ist.

5. Vorrichtung nach Anspruch 4, dadurch gekennzeichnet, daß das Gegendruckventil (17) als Drossel ausgebildet ist.

6. Vorrichtung nach Anspruch 3, dadurch gekennzeichnet, daß die Verbindungsleitung (16) stromabwärts der Abzugsöffnung (25) in die Trennzone (26) des zweiten Extruders (18) einmündet.

7. Vorrichtung nach Anspruch 3, dadurch gekennzeichnet, daß im zweiten Extruder (18) stromabwärts der Trennzone (26) eine Vakuumzone (31) ausgebildet ist.

8. Vorrichtung nach Anspruch 7, dadurch gekennzeichnet, daß die Trennzone (26) und die Vakuumzone (31) durch eine Schmelze-Dichtung (29) voneinander getrennt sind.

9. Vorrichtung nach Anspruch 3, dadurch gekennzeichnet, daß mindestens der zweite Extruder (18) als Doppelschnecken-Extruder ausgebildet ist.

10. Vorrichtung nach Anspruch 9, dadurch gekennzeichnet, daß mindestens der zweite Extruder (18) als dicht kämmender Gleichdrall-Doppelschnecken-Extruder ausgebildet ist.

## Claims

1. A method of removing impurities, such as monomeric low-molecular substances, solvents or the like, from polymeric synthetic plastics materials, a synthetic plastics material which contains impurities being melted under pressure after which the molten material is mixed with an extraction gas in the supercritical state, the mixture of molten material and gas being pressure-relieved and thereby separated into molten material which is substantially free from impurities and into gas which contains the impurities, characterized in that the mixing of molten material and gas takes place at supercritical pressure in an enclosed space and in that the mixture is transferred to a further space where it is separated, and in that the gas with the impurities on the one hand and the synthetic plastics material which is substantially free from impurities on the other hand are withdrawn from the space at locations which are spaced apart from each other.

2. A method according to Claim 1, characterized in that the molten material which is substantially free from impurities and gas is subjected to a vacuum treatment.

3. An apparatus for carrying out the method according to Claim 1 or 2, with an extruder (1) containing at least one worm, the extruder comprising an intake aperture (5) for synthetic plastics material containing impurities, a melting zone (9) downstream thereof and, downstream of the melting zone (9), a mixing zone (13) into which discharges a feed (15) for extraction gas which is in the supercritical state, the mixing zone (13) being followed by an arrangement for separating the molten material from the gas which contains the impurities, characterized in that the arrangement is constituted by a second extruder (18) containing at least one drivable worm and connected to the first extruder (1) via a connecting line (16) which discharges into a separating zone (26) of the second extruder (18) and in that the mixing zone (13) in the first extruder (1) is sealed against the melting zone (9) and against the second extruder (18) and in that the separating zone (26) of the second extruder (18) is on the upstream side of a means (34) of discharging the synthetic plastics material, provided with at least one discharge orifice (25) for extraction gas.

4. An apparatus according to Claim 3, characterized in that the mixing zone (13) is followed by a counter-pressure valve (17).

5. An apparatus according to Claim 4, characterized in that the counter-pressure valve (17) is constructed as a throttle.

6. An apparatus according to Claim 3, characterized in that downstream of the discharge orifice (25), the connecting pipe (16) opens out into the separating zone (26) of the second extruder (18).

7. An apparatus according to Claim 3, characterized in that downstream of the separating zone (26), a vacuum zone (31) is formed in the second extruder (18).

8. An apparatus according to Claim 7, characterized in that the separating zone (26) and the vacuum zone (31) are separated from each other by a gasket (29) adapated to seal against molten material.

9. An apparatus according to Claim 3, characterized in that at least the second extruder (18) is constructed as a twin-worm extruder.

10. An apparatus according to Claim 9, characterized in that at least the second extruder (18) is constructed as a tightly meshing uniform-pitch twin-worm extruder.

## Revendications

1. Procédé pour l'élimination des impuretés de matières plastiques polymères, telles que des substances monomères de faible poids moléculaire, des solvants ou similaires, une matière plastique contenant des impuretés étant pour ce faire fondue sous pression, la masse fondue étant ensuite mélangée avec un gaz d'extraction à l'état surcritique, et le mélange de la masse fondue et du gaz étant séparé par détente en une masse fondue débarrassée de la majeure partie des impuretés, et en un gaz contenant les impuretés, caractérisé en ce que le mélange de la masse fondue et du gaz à pression surcritique est effectué dans un espace fermé, en ce que le mélange est transféré dans un autre espace dans lequel il est séparé, et en ce que le gaz avec les impuretés d'une part, et la matière plastique débarrassée de la majeure partie des impuretés d'autre part, sont prélevés de cet espace à des endroits distants l'un de l'autre.

2. Procédé selon la revendication 1, caractérisé en ce que la masse fondue débarrassée de la majeure partie des impuretés et du gaz est soumise à un traitement sous vide.

3. Dispositif pour la mise en oeuvre du procédé selon la revendications 1 ou la revendication 2, avec une extrudeuse (1) à au moins une vis, laquelle comporte une ouverture d'introduction (5) pour la matière plastique contenant des impuretés, une zone de fusion (9) en aval de celle-ci, et une zone de mélange (13) en aval de cette dernière, dans laquelle aboutit une alimentation (15) pour le gaz d'extraction à l'état surcritique, un dispositif pour séparer le gaz contenant des impuretés de la masse fondue étant situé en aval de la zone de mélange (13), caractérisé en ce que le dispositif est constitué par une deuxième extrudeuse (18) à au moins une vis pouvant être entraînée, laquelle est reliée à la première extrudeuse (1) par une conduite de liaison (16) aboutissant dans une zone de séparation (26) de la deuxième extrudeuse (18), en ce que la zone de mélange (13) dans la première extrudeuse (1) est étanchée par rapport à la zone de fusion (9) et par rapport à la deuxième extrudeuse (18), et en ce qu'en amont de la zone de séparation (26) de la deuxième extrudeuse (18), il est prévu un dispositif d'extraction (34) pour la matière plastique, lequel comporte au moins un orifice d'évacuation (25) pour le gaz d'extraction.

4. Dispositif selon la revendication 3, caractérisé en ce qu'une soupape à contre pression (17) est placée en aval de la zone de mélange (13).

5. Dispositif selon la revendication 4, caractérisé en ce que la soupape à contre-pression (17) est réalisée sous forme d'un étranglement.

6. Dispositif selon la revendication 3, caractérisé en ce que la conduite de liaison (16) aboutit dans la zone de séparation (26) de la deuxième extrudeuse (18), en aval de l'orifice d'évacuation (25).

7. Dispositif selon la revendication 3, caractérisé en ce qu'il est réalisé une zone sous vide (31) dans la deuxième extrudeuse (18), en aval de la zone de séparation (26).

8. Dispositif selon la revendication 7, caractérisé en ce que la zone de séparation (26) et la zone sous vide (31) sont séparées entre elles par une étanchéité de fusion ( 29 ).

9. Dispositif selon la revendication 3, caractérisé en ce qu'au moins la deuxième extrudeuse (18) est réalisée sous forme d'une extrudeuse à double vis.

10. Dispositif selon la revendication 9, caractérisé en ce qu'au moins la deuxième extrudeuse (18) est réalisée sous forme d'une extrudeuse à double vis à pas constant adhérant de manière étanche.
